# EUROPEAN PATENT APPLICATION

(11) **EP 2 833 227 A1**
(43) Date of publication of application: **04.02.2015**
(21) Application number: 14178546.9
(22) Date of filing: 25.07.2014
(51) Int. Cl.: G05B 23/02

(54) **System and method for presenting information in an industrial monitoring system**

(30) Priority: 02.08.2013 US 201313958506
(71) Applicant: General Electric Company, Schenectady, New York 12345 (US)
(72) Inventor: Fuhrmann JR, Barrett Joseph, Minden, NV 89423-4119 (US); Axness, Brian Martin, Minden, NV 89423-4119 (US); Kavanaugh, Trevor Shaun, Minden, NV 89423-4119 (US)
(74) Representative: Illingworth-Law, William Illingworth

(57) **Abstract**

A system 10 includes an industrial monitor 14 configured to receive inputs from a plurality of sensors 20, 22, 24, 26, 28, 30, 32 coupled to a mechanical system 12. The industrial monitor 14 is configured to determine a plurality of measurements corresponding to operation of the mechanical system 12 based, at least in part, on the received inputs. The system 10 includes a display device 94 communicatively coupled to the industrial monitor 14, wherein the display device 94 is configured to present a user interface 98 having a plurality of screens 122, and wherein each of measurement is associated with at least one of the plurality of screens 122. Further, each screen 124, 126, 128, 130 of the plurality of screens 122 is configured to selectively present a visual indicator having an appearance when a measurement 114, 116, 118, 120 associated with a different screen 124, 126, 128, 130 has an irregular status. Further, the visual indicator identifies the particular measurement having the irregular status.

## Description

The subject matter disclosed herein relates to industrial monitoring systems, such as asset condition monitoring systems.

Industrial monitoring systems, such as asset condition monitoring systems, generally provide monitoring capabilities for various types of mechanical devices and systems. For example, an industrial monitor may monitor one or more operational parameters of a gas turbine system. By specific example, the industrial monitoring system may include a number of sensors (e.g., temperature sensors, pressure sensors, flow sensors, and so forth) disposed throughout the gas turbine system. Such sensors may allow the industrial monitoring system to determine parameters of the mechanical system based, at least in part, on input received from these sensors. Additionally, certain industrial monitoring systems may include one or more graphical user interfaces (GUIs) that may be used to present (e.g., to an operator) the determined parameters of the mechanical system being monitored.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In an embodiment, a system includes an industrial monitor configured to receive inputs from a plurality of sensors coupled to a mechanical system. The industrial monitor is configured to determine a plurality of measurements of the mechanical system in operation based, at least in part, on the received inputs. The system also includes a display device communicatively coupled to the industrial monitor. The display device is configured to present a user interface including a plurality of screens, each screen configured to selectively present a visual indicator when a particular measurement of the plurality of measurements has an irregular status. Further, the visual indicator identifies the particular measurement having the irregular status.

In another embodiment, a method includes receiving inputs from a plurality of sensor devices coupled to a mechanical device and determining a plurality of measurements for the mechanical device based on the received inputs. The method also includes displaying a particular screen of a user interface on a display device, wherein the user interface includes a plurality of screens. The method further includes selectively presenting a corresponding visual indicator on the particular screen of the user interface for each of one or more measurements of the plurality of measurements having an irregular status.

In another embodiment, a non-transitory, computer-readable medium storing instructions executable by a processor of an electronic device. The instructions include instructions to determine, via a processor, a plurality of measurements for a mechanical system based on sensor inputs received from one or more sensors coupled to the mechanical system. The instructions also include instructions to present, on a display device, a direct view screen of a user interface. The instructions further include instructions to selectively present, on the direct view screen, a visual indicator when the processor determines that a particular measurement of the plurality of measurements has an irregular status, wherein the visual indicator identifies the particular measurement and indicates a severity of the irregular status of the particular measurement.

These and other features, aspects, and advantages of the present invention will become better understood when the following detailed description is read with reference to the accompanying drawings in which like characters represent like parts throughout the drawings, wherein:
FIG. 1 is a diagram illustrating an embodiment of an industrial monitoring system, including certain inputs and outputs of the monitoring system;
FIG. 2 is a diagram illustrating an embodiment of a modular asset condition monitor as well as other devices in communication with the monitor;
FIG. 3 is a perspective view of an embodiment of a module of the modular asset condition monitor of FIG. 2, including a screen for displaying a graphical user interface (GUI);
FIG. 4 is a perspective view of an embodiment of a portable monitoring device, including a screen for displaying a GUI;
FIG. 5 is a perspective view of an embodiment of a portable computing device,
including a screen for displaying a GUI;
FIG. 6 is a diagram illustrating a number of screens for an embodiment of the GUI;
FIG. 7 is a screen view of an embodiment of a direct view screen of the GUI corresponding to a particular measurement and including visual indicators denoting that one or more measurements are experiencing irregular statuses;
FIG. 8 is a screen view of an embodiment of a direct view screen of FIG. 7 in which the visual indicators include font color emphasis to convey the severity of the irregular statuses;
FIG. 9 is a screen view of an embodiment of a direct view screen of FIG. 7 in which the visual indicators include background color emphasis to convey a severity of the irregular statuses;
FIG. 10 is a screen view of an embodiment of a direct view screen of FIG. 7 in which the visual indicators include channel names and font emphasis to convey the severity of the irregular statuses;
FIG. 11 is a screen view of an embodiment of a direct view screen of FIG. 7 in which the visual indicators include border emphasis to convey a severity of the irregular statuses;
FIG. 12 is a screen view of an embodiment of a direct view screen of FIG. 7 in which the visual indicators include animated emphasis to convey a severity of the irregular statuses;
FIG. 13 is a screen view of an embodiment of a direct view screen of FIG. 7 in which the visual indicators include character emphasis to convey a severity of the irregular statuses;
FIG. 14 is a screen view of an embodiment of a direct view screen for a measurement experiencing an irregular status; and
FIG. 15 is a screen view of an embodiment of the direct view screen of FIG. 14 after the irregular status has been resolved.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

As set forth above, industrial monitoring systems generally enable the monitoring of one or more operational parameters of a mechanical device or system, such as a turbomachine system, a power generation system, a gasification system, or a chemical production system. For example, the disclosed embodiments may be used or integrated with a gas turbine system, a stream turbine system, a combined cycle system, a power plant, or any combination thereof. An industrial monitoring system may include a number of sensors coupled to portions of a mechanical device to measure aspects of the mechanical device during operation. These sensors may include temperature sensors, pressure sensors, flow rate sensors, clearance sensors, proximity sensors, flame sensors, gas composition sensors, vibration sensors, current sensors, voltage sensors, other suitable sensors, or combinations thereof. Accordingly, the industrial monitor may include a number of channels, each of which may receive input from one or more sensors to determine one or more measurements for the mechanical device or system. Furthermore, the industrial monitor may determine an appropriate status for each condition or measurement based, at least in part, on the value of each measurement relative to one or more predetermined threshold values.

As such, present embodiments are directed towards an industrial monitoring system that includes one or more display devices (e.g., disposed on the industrial monitor, a workstation, a portable monitoring device, a smart phone device, or another suitable device) to allow the industrial monitoring system to display a graphical user interface (GUI) to an operator. Further, the GUI may include various screens to display, for example, names for the channels of the industrial monitor as well as the measurements collected by each channel. The display devices of the industrial monitoring system may have limited dimensions, which, in turn, may limit the available screen space to display information.

Accordingly, present embodiments include features, discussed in detail below, that are generally directed toward maximizing an amount of information conveyed by each screen of the GUI displayed on the display devices. Present embodiments may use, for example, one or more visual effects or cues to convey to the operator a combined measurement status for each channel of the industrial monitor. This may allow the operator to determine, for example, that one or more channels include a measurement having an irregular status (e.g., a currently alarming or latched alarm status) without the operator having to navigate through several screens of the GUI to make a similar determination. Accordingly, present embodiments provide an efficient GUI that may enable an operator to more quickly identify and address an issue (e.g., one or more irregular measurement statuses) in the monitored mechanical device or system.

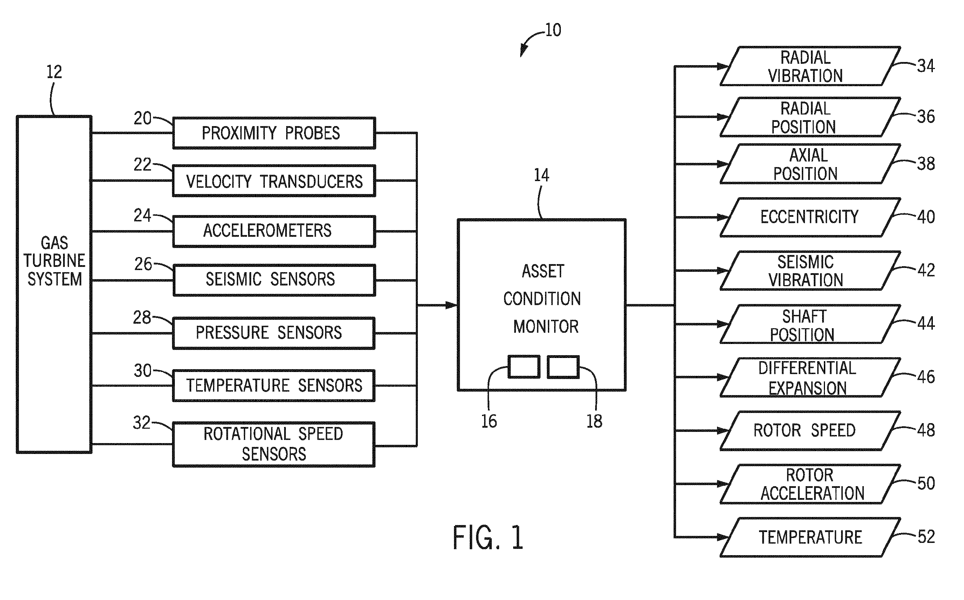

With the foregoing in mind, FIG. 1 illustrates an industrial monitoring system 10 for monitoring various operational parameters of a gas turbine system 12. It may be appreciated that, while a gas turbine system 12 is provided as one example of a monitored mechanical system, in other embodiments, the industrial monitoring system 10 may be used to monitor operational parameters of any mechanical devices or mechanical systems. For example, the industrial monitoring system 10 may be used to monitor operational parameters of axial compressors, screw compressors, gears, turbo-expanders, horizontal and vertical centrifugal pumps, electric motors, generators, fans, blowers, agitators, mixers, centrifuges, pulp refiners, ball mills, crushers, pulverizers, extruders, pelletizers, cooling towers, heat exchangers, or other suitable mechanical devices. Further, the industrial monitoring system 10 may be used to measure one or more mechanical devices of larger mechanical systems (e.g., steam turbine systems, hydraulic turbine systems, wind turbine systems, reactors, gasifiers, gas treatment systems, industrial automation systems, or other suitable mechanical systems).

The industrial monitoring system 10 illustrated in FIG. 1 includes an asset condition monitor 14, hereinafter referred to as monitor 14, including at least one processor 16 and memory 18. The monitor 14 illustrated in FIG. 1 is coupled to a number of sensors, including clearance sensors or proximity probes 20, velocity transducers 22, accelerometers 24, vibration or seismic sensors 26, pressure sensors 28, temperature sensors 30, and rotational speed sensors 32. It should be appreciated that the sensors 20, 22, 24, 26, 28, 30, and 32 are merely provided as examples, and that any other sensors (e.g., flow sensors, gas composition sensors, magnetic field sensors, flame sensors, current sensors, voltage sensors, and so forth) may be used that are suitable for performing measurements relevant to the operation and performance of a mechanical device or system (e.g., gas turbine system 12).

As illustrated in FIG. 1, the various sensors 20, 22, 24, 26, 28, 30, and 32 that are communicatively coupled to the monitor 14 may provide the monitor 14 with input such that the monitor 14 may, using the processor 16 and memory 18, determine one or more operational parameters of the monitored mechanical system (e.g., the gas turbine system 12). For example, the illustrated monitor 14 may receive input from measurements of the rotational speed of a shaft of the gas turbine system 12 from one or more rotational speed sensors 32, and may determine operational parameters (e.g., the rotation rate of the shaft, power output or load of the gas turbine system 12, or any other suitable operational parameter) based on the input received from the one or more rotational speed sensors 32, as well as other sensors functionally coupled to the gas turbine system 12. It may be appreciated that, as set forth in detail below, in certain embodiments, each operational parameter of the monitored mechanical system may be determined by a single channel of the monitor 14, and each channel of the monitor 14 may determine one or more measurements (e.g., based on the inputs received from the sensors 20, 22, 24, 26, 28, 30, and 32) in order to determine the operational parameter.

FIG. 1 illustrates some example operational parameters of the monitored mechanical system (e.g., gas turbine system 12) that may be determined (e.g., calculated or estimated) by the monitor 14 based on the various inputs received from sensors 20, 22, 24, 26, 28, 30, and 32. For the embodiment illustrated in FIG. 1, the monitor 14 may determine radial vibration 34, radial position 36, axial position 38, eccentricity 40, seismic vibration 42, shaft position 44, differential expansion 46, rotor speed 48, rotor acceleration 50, temperature 52, and/or any other suitable operational parameter of the gas turbine system 12, or any component thereof (e.g., compressors, shafts, pumps, valves, etc.). For example, the monitor 14 may use the processor 16 and memory 18 to process input from one or more proximity probes 20 to determine a differential expansion 46 of a casing of turbine section of the gas turbine system 12. By further example, the monitor 14 may process input from one or more rotational speed sensors 32 and/or one or more accelerometers 24 to determine rotor acceleration 50 of a shaft of the gas turbine system 12.

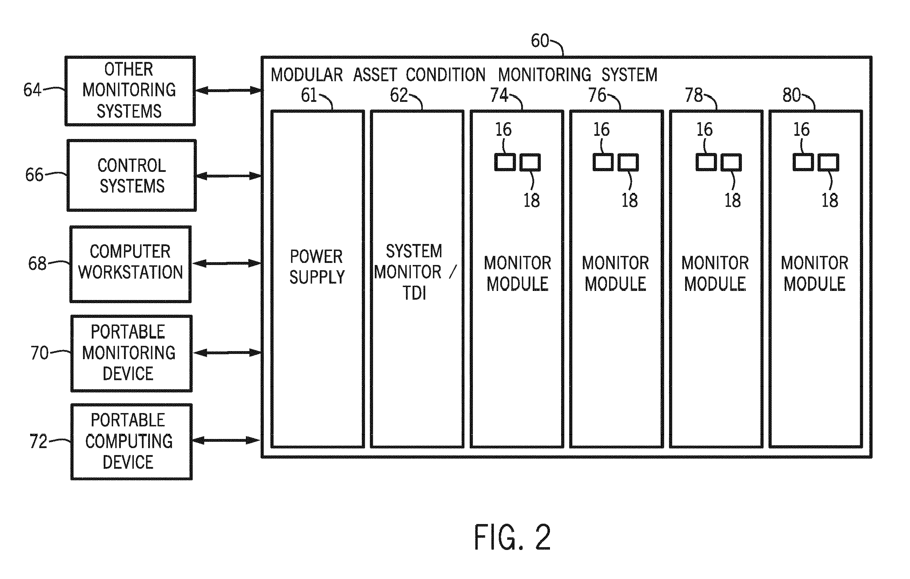

In certain embodiments, a number of monitors (e.g., monitor 14) may be combined in a modular fashion to form a modular monitoring system. For example, the modular asset condition monitoring system 60 illustrated in FIG. 2, hereinafter referred to as monitoring system 60, includes a number of modules suitable for performing particular functions during operation of the monitoring system 60. For example, in the embodiment of the monitoring system 60 illustrated in FIG. 2, a power supply module 61 may receive alternating current (AC) or direct current (DC) power and perform any suitable power conversions to provide power to the monitoring system 60. In other embodiments, the power supply module 61 may not be a module of the modular asset condition monitoring system 60, but may rather be a separate component coupled to the modular asset condition monitoring system 60. The illustrated monitoring system 60 also includes a system monitor or transient data interface (TDI) 62, which may provide the monitor's primary interface to the configuration, display, condition and monitoring software, and to external control systems. For example, the TDI 62 may support suitable communication protocols to communicatively couple the monitoring system 60 to other monitoring systems 64, to control systems 66 (e.g., process control systems, historians, and other plant control and automation systems), to computer workstations 68, to portable monitoring devices 70, to portable computing devices 72, and/or other suitable devices.

In addition to the power supply module 61 and the TDI 62, the monitoring system 60 illustrated in FIG. 2 also include a number of other modules, namely monitor modules 74, 76, 78, and 80, each an embodiment of the asset condition monitor 14 of FIG. 1. That is, each monitor module 74, 76, 78, and 80 may include a respective processor 16 and memory 18 configured to receive and process inputs from a variety of sensors (e.g., sensors 20, 22, 24, 26, 28, 30, and/or 32 of FIG. 1) to determine one or more operational parameters of the monitored mechanical device or system (e.g., gas turbine system 12). For example, monitor module 74 may include a number of channels (e.g., 4, 5, 6, 8, 10, 12, 16, 18, 20, or another suitable number of channels), each of which may receive input from a number of sensors to determine one of: radial vibration 34, radial position 36, axial position 38, eccentricity 40, differential expansion 46, rotor speed 48, rotor acceleration 50, or another suitable operational parameter of a mechanical system. By specific example, the monitor module 76 may include four channels, each of which may receive input from a number of sensors or determine one of case expansion or other types of differential expansion (e.g., standard single ramp differential expansion, non-standard single ramp differential expansion, dual ramp differential expansion, complementary differential expansion), axial position 38, and other positional measurements (e.g., valve position). By further example, the monitor module 78 may, in certain embodiments, include six channels, each dedicated to monitoring a particular temperature 52 in a portion of the monitored mechanical system.

Accordingly, each channel of a monitor module may receive a number (e.g., 1 to 500, 1 to 100, 1 to 50, or 1 to 20) of inputs from a number of sensors (e.g., sensors 20, 22, 24, 26, 28, 30, and/or 32) to determine an operational parameter of the mechanical system. It may further be appreciated that each channel may include a number (e.g., 1, 2, 4, 5, 6, 7, 8, or another suitable number) of underlying measurements that may be determined, based on received sensor input, in route to determining the overall operational parameter value for the mechanical system. For example, an embodiment of a four-channel monitor module (e.g., monitor module 74) may determine four operational parameters of the mechanical system; however, since, in certain embodiments, each channel may include 8 measurements, such a four-channel monitor may actually determine up to 32 individual measurements from the sensor input. By specific example, in certain embodiments, a radial vibration channel may determine up to 8 measurements, including a basic overall (direct) vibration amplitude, gap voltage, filtered amplitude (e.g., 1x filtered amplitude and 2x filtered amplitude), filtered phase (e.g., 1x filtered phase and 2x filtered phase), NOT 1x amplitude, and Smax (e.g., maximum phase). Further, it may be appreciated that alarm thresholds may be individually set for each measurement determined by each channel (e.g., Smax should remain below a threshold value to avoid an alarm condition). Other embodiments of monitor modules may include 1 to 100 (e.g., 1, 2, 3, 4, 5, 6, 7, 8, 9, 10, 11, 12, 13, 14, or 15) channels, each capable of determining 1 to 100 (e.g., 1, 2, 3, 4, 5, 6, 7, 8, 9, 10) measurements, to monitor an operational parameter of a mechanical system. Additionally, other embodiments of the modular monitoring system 60 may include, for example, 1 to 50, 1 to 25, 1 to 10, 1 to 8 monitor modules.

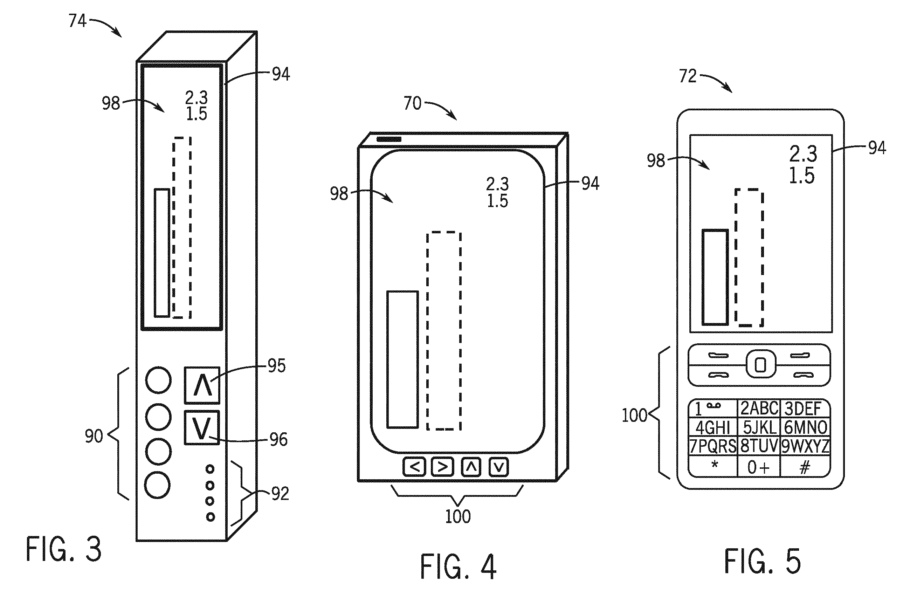

FIG. 3 illustrates a perspective view of an embodiment of the monitor module 74 of FIG. 2. The illustrated embodiment of the monitor module 74 includes four buffered output connections 90 (e.g., coaxial connections or other suitable connections) disposed on a front face of the monitor module 74 that may be coupled to portable test instrumentation by an operator. In other embodiments, the monitor module 74 may include any number of buffered output connections 90. Additionally, in certain embodiments, the monitor module 74 may also include a number of light emitting diodes (LEDs) 92 disposed on the front face of the monitor module 74 that may be used to indicate a status (e.g., normal, alert, connected, bypass, node voltage, "Not Ok", or a similar status) of the monitor module 74.

The illustrated monitor module 74 of FIG. 3 also includes a display device 94 that may be used to display information to an operator of the monitor module 74. For example, the display device may be a liquid crystal display (LCD), light-emitting diode (LED), organic light-emitting diode (OLED), or another suitable color display device. Further, the monitor module 74 also includes input devices (e.g., up arrow button 95 and down arrow button 96) that may be manipulated by an operator, for example, to control which of a number of screens of a graphical user interface (GUI) 98 is currently being displayed on the display device 94. In other embodiments, other input devices (e.g., buttons, dials, keyboards, mice, touch screens, or any other suitable input device) may additionally or alternatively be used with the module 74. As discussed in detail below, the GUI 98 may include screens for the names of the channels currently being monitored by the monitor module 74 as well as graphical representations for the measurements currently being collected by each of the channels.

It may be appreciated that, as illustrated in FIG. 2, in certain embodiments, other devices may be used to present the GUI 98. Accordingly, FIG. 4 illustrates a perspective view of an embodiment of the portable monitoring device 70, which may be a small, tablet-like device that may be used to present the GUI 98 to an operator. Similarly, FIG. 5 illustrates a perspective view of an embodiment of the portable computing device 72, which may be a smart phone, tablet, laptop, or similar mobile processing device. Both the portable monitoring device 70 of FIG. 4 and the portable computing device 72 of FIG. 5 may generally include a processor that may be used to execute instructions stored in a memory to present, on the respective display devices 94, the various screens of the GUI 98. Also, the portable monitoring device 70 and the portable computing device 72 may include communication circuitry (e.g., wireless networking circuitry) to allow the devices to communicate with the monitoring system 60 in order to present the GUI 98. Additionally, the portable monitoring device 70 and the portable computing device 72 may include user inputs 100 that may be used by an operator to, for example, control which screen of the GUI 98 is currently presented on the display device 94 of each device, respectively.

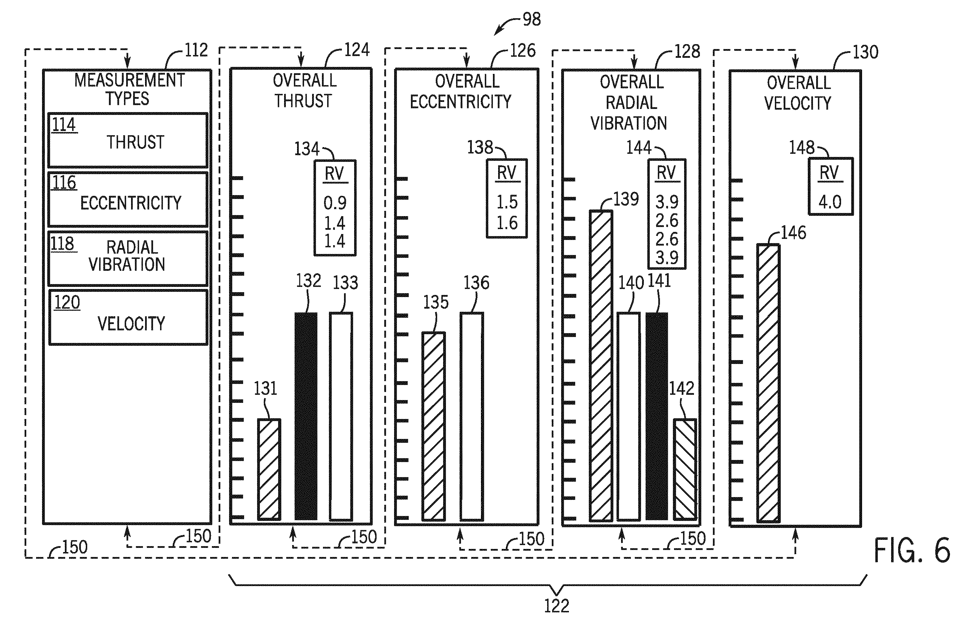

FIG. 6 illustrates an embodiment of the GUI 98 that may be displayed on one or more of the respective displays 94 of the monitor module 74 of FIG. 3, the portable monitoring device 70 of FIG. 4, and/or the portable computing device 72 of FIG. 5. As illustrated in FIG. 6, in certain embodiments, the GUI 98 may include a number of screens that are logically arranged in a continuous loop such that an operator may progressively cycle through all screens of the GUI 98 by continually pressing a user input (e.g., the up arrow button 95 or the down arrow button 96 illustrated in FIG. 3). As illustrated in FIG. 6, the first screen may be a measurement type screen 112, which may include a list (e.g., a visual representation) of the types of measurements currently being performed by the monitor (e.g., monitor module 74). For the illustrated embodiment, the measurement type screen 112 includes four measurement types, namely measurement type 114 (i.e., THRUST), measurement type 116 (i.e., ECCENTRICITY), measurement type 118 (i.e., RADIAL VIBRATION), and measurement type 120 (i.e., VELOCITY).

The GUI 98 illustrated in FIG. 6 includes a number of direct view screens 122, namely direct view screens 124, 126, 128, and 130, each of which may be respectively associated with a particular measurement type (e.g., one of measurement types 114, 116, 118, 120). For example, direct view screen 124 of FIG. 6 illustrates three graphical representations (e.g., bar graphs 131, 132, and 133), each representing a different overall thrust measurement currently being determined by different channels of the monitor module 74. By specific example, each of the overall measurements 131, 132, and 133 may provide a total or cumulative thrust measurement being determined by the monitor module 74 for three different components of the monitored mechanical system 12. Additionally, the illustrated direct view screen 124 includes a real-time value (RV) section 134 that may be used to present numerical values for the overall measurements 131, 132, and 133 illustrated on the direct view screen 124. It may be appreciated that, in other embodiments, the graphical representations may be line graphs, pie charts, Venn diagrams, or any other suitable graphical representations that may be presented on the display devices 94 discussed above. It may also be appreciated that the presentation of the data (e.g., the data scales, units, tick marks, etc.) on the discussed direct view screens are for illustrative purposes and are not intended to limit the present disclosure by conveying particular or relative values for the illustrated measurements.

It may be appreciated that the illustrated overall measurements illustrated in the GUI 98 of FIG. 6 (e.g., overall measurements 131, 132, and 133) may each represent an operational parameter of a particular measurement type (e.g., THRUST) being determined by one or more channels of the monitor module 74. In other words, the overall measurements 131, 132, and 133 may each represent a culmination of a number of underlying measurements that may be, as discussed above, determined by each channel based on inputs from one or more sensors. It may further be appreciated that, in certain embodiments, the GUI 98 may include additional screens for each of the measurements determined by each channel. For example, in certain embodiments, if each channel of the monitor module 74 includes 8 measurements (e.g., overall amplitude, gap voltage, 1x filtered amplitude, 2x filtered amplitude, 1x filtered phase, 2x filtered phase, NOT 1x amplitude, and Smax), 7 additional direct view screens may be inserted after each overall direct view screen (e.g., direct view screens 124, 126, 128, and 130) in the GUI 98 illustrated in FIG. 6. Further, it may be appreciated that, for such embodiments, each of the additional screen may illustrate multiple measurements of the same measurement type. For the illustrated embodiment, since the overall thrust direct view screen 124 illustrates three different overall measurements of the THRUST measurement type 114 via the bar graphs 131, 132, and 133, each additional screen (e.g., a gap voltage screen, a 1x filtered amplitude screen, a 2x filtered amplitude screen, a 1x filtered phase screen, a 2x filtered phase screen, a NOT 1x amplitude screen, and a Smax screen) associated with the THRUST measurement type 114 may similarly include three bar graphs, each corresponding to a measurement of a different component of the monitored mechanical system 12.

As illustrated in FIG. 6, direct view screen 126 includes a bar graphs 135 and 136, which graphically illustrate overall measurements of the ECCENTRICITY measurement type 116. Further, like the direct view screen 124, the illustrated direct view screen 126 includes a RV section 138 that may be used to present numerical values for the overall measurements illustrated by the bar graphs 135 and 136. The illustrated direct view screen 128 includes bar graphs 139, 140, 141, and 142 representing overall measurements of the RADIAL VIBRATION measurement type 118. The direct view screen 128 further includes a RV section 144 to present numerical values for the overall measurements illustrated by bar graphs 139, 140, 141, and 142. Further, the illustrated direct view screen 130 includes a bar graph 146 representing a single overall measurement of the VELOCITY measurement type 120, as well as a RV section 148 to present the numerical value for the overall measurement illustrated by the bar graph 146. As such, it may be appreciated that any of the direct view screens 122 may include any number of (e.g., 1, 2, 3, 4, 5, 6, 7, 8, 9, 10 or more) graphical representations (e.g., bar graphs) to illustrate multiple measurements of the same measurement type.

Additionally, as mentioned above, an operator may navigate through the various screens of the GUI 98 using, for example, the user inputs 95 and/or 96, illustrated in FIG. 3. As such, as illustrated for the embodiment of FIG. 6, the GUI 98 includes a number of directional arrows 150 that connect each of the screens 112, 124, 126, 128, and 130, to one another to indicate which screen may be subsequently presented based on the input provided by the operator. For example, as illustrated for the embodiment of FIG. 6, when viewing screen 112, if the GUI 98 receives operator input from the down arrow button 96, the GUI 98 may discontinue presentation of the screen 112, and may proceed with presenting the screen 124. Then, when the GUI 98 is presenting the screen 124, if the GUI 98 receives operator input from the down arrow button 96 once again, then the GUI 98 may cause the display 94 to present the screen 126. However, if, when the GUI 98 is presenting the screen 124, the GUI 98 instead receives operator input from the up arrow button 95, then the GUI 98 may cause the display 94 to present the screen 112 once again. As such, as indicated by the directional arrows 150, the GUI 98 may be logically arranged as a continuous loop that allows the operator to cycle through the various screens of the GUI 98 using, for example, a single user input (e.g., up arrow button 95 or down arrow button 96). It may be appreciated that the layouts illustrated by FIG. 6 are merely provided as examples, and that in certain embodiments, other arrangements of screens and/or other arrangements of the elements on the screens may be utilized within the GUI 98.

With the foregoing in mind, it may be appreciated that, when an operator is viewing a particular screen of the GUI 98, the amount of information that may be presented may be limited, for example, by the size of the display device 94. For example, when the operator is viewing the measurement type screen 112 illustrated in FIG. 6, the operator may not be capable of concurrently viewing the information contained on the direct view screen 128 of the GUI 98. As such, as illustrated in FIG. 6, an operator viewing the measurement type screen 112 may be unaware that the RADIAL VIBRATION measurement type 118, associated with the direct view screen 128, has one or more measurements experiencing an irregular status. As used herein, an irregular status may refer, for example, a currently alarming status (e.g., a measurement having a value currently beyond a predetermined threshold value), a latched alarm status (e.g., a measurement having a value that has previously exceeded the predetermined threshold value for which the alarm has not been cleared), a bypass status (e.g., a measurement that is temporarily not being determined), or any other status that is not a normal or healthy status. As such, present embodiments enable methods of encoding additional information in the presentation of the screens of the GUI 98 (e.g., the measurement type screen 112), such that an operator may be able to glean additional information regarding the statuses of the various measurement types being determined.

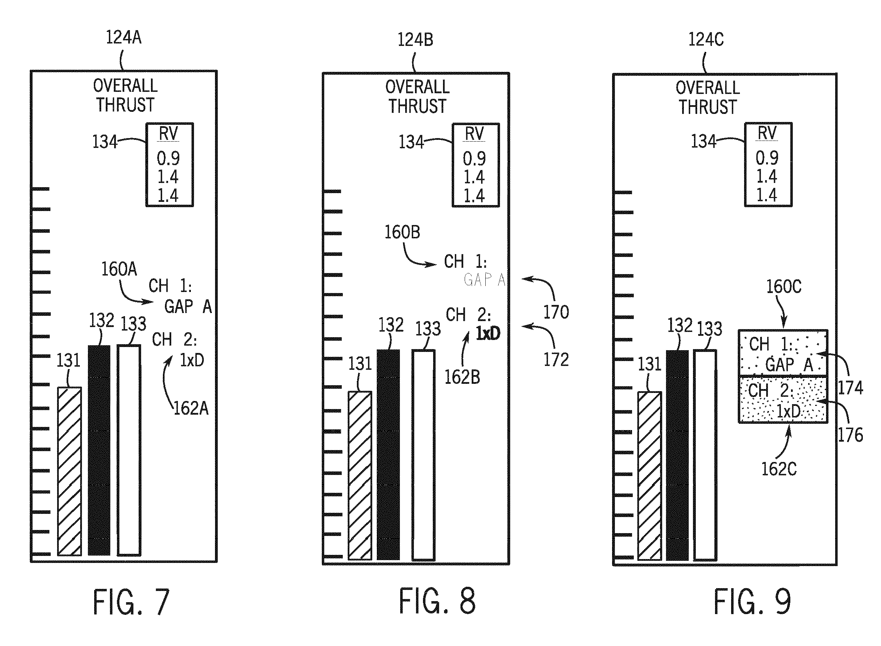

For example, FIGS. 7-13 illustrate embodiments of the direct view screen 124 illustrated in FIG. 6. That is, FIGS. 7-16 illustrate direct view screens 124A-G having visual indicators that may enable an operator viewing any of the direct view screens 124A-G to ascertain that a particular measurement has an irregular status (e.g., a currently alarming status, a latched alarm status, a bypass status, or any other irregular status). Further, as set forth in detail below, in certain embodiments, the visual indicators may also convey to the operator a severity of the irregular status (e.g., based on the irregular status itself, an amount of time that the measurement has been experiencing an irregular status, how far beyond the threshold values the measurements have reached, or similar indication of severity) being experienced by one or more measurements. It may be appreciated that, in certain embodiments, a visual indicator may include combinations of any one or more of any of the visual effects and emphases set forth below in FIGS. 7-13. Additionally, in certain embodiments (e.g., when the display device is a touch screen device or includes a pointing device, such as a mouse), an operator may directly interact with the disclosed visual indicators (e.g., via a touch or a mouse click) to cause the GUI 98 to immediately present the measurement that corresponds to the visual indicator.

With the foregoing in mind, FIG. 7 is a screen view of an embodiment of a direct view screen 124A of the GUI 98. As discussed above with respect to FIG. 6, the direct view screen 124A includes the bar graphs 131, 132, and 133 as well as the associated RV section 134, the values of which correspond to overall measurements of the THRUST measurement type 114. However, in addition to the features discussed above, the direct view screen 124A includes visual indicators 160A and 162A. The illustrated visual indicator 160A includes the text, "Ch 1: Gap A," which includes a channel identification portion (e.g., "Ch 1") and a measurement identification portion (e.g., "Gap A"). Accordingly, the visual indicator 160A indicates that a particular measurement (e.g., "Gap A" measurement) of the channel 1 has an irregular status. The visual indicator 162A includes the text, "Ch 2: 1xD," indicating that a particular measurement (e.g., the 1x filtered amplitude measurement) of the channel 2 has an irregular status.

For example, an operator viewing the direct view screen 124A of FIG. 7, in addition to visualizing the overall THRUST measurements associated with the direct view screen 124A, may also immediately be made aware of the irregular status of one or more measurements, including measurements not presented on the direct view screen 124A. It may also be appreciated that the illustrated visual indicators (e.g., visual indicators 160A and 162A) are presented in a manner that does not interfere with (e.g., obscure) the normal presentation of the measurements associated with the direct view screen (e.g., elements 132 and 134 of direct view screen 124A). As discussed below, in certain embodiments, the visual indicators 160A and 162A may only be selectively presented on each of the direct view screens 122 when the indicated measurements experience an irregular status, and may be removed when the irregular status has been resolved.

For the embodiment of the direct view screen 124B illustrated in FIG. 8, the measurements associated with the illustrated direct view screen 124B are represented by the bar graphs 131, 132, and 133 (as well as the RV section 134). Additionally, the direct view screen 124B includes visual indicators 160B and 162B, which respectively denote that particular measurements are experiencing irregular statuses. In particular, visual indicator 160B includes the text, "Ch 1: Gap A" in which the measurement identification portion (e.g., "Gap A") is presented with a particular font color 170 to indicate a severity of the irregular status being experienced by the "Gap A" measurement of channel 1. Visual indicator 162B includes the text, "Ch 2: 1xD" in which the measurement identification portion (e.g., "1xD") is presented with a particular font color 172 to indicate a severity of the irregular status of the particular measurement (e.g., the 1x filtered amplitude measurement) of channel 2. In other embodiments, the channel identification portion of the visual indicators 160B and 162B that identifies the channel (e.g., "Ch 1:" and "Ch 2:") may also have a particular font color that related either to the identity of the channel (e.g., all channel identification portions for a particular channel have a common color) or may match the font color used to present the measurement identification portion of each visual indicator.

It may be appreciated that, for the direct view screen 124B illustrated in FIG. 8, the font colors 170 and 172 used to present the measurement identification portion and/or the channel identification portion of the visual indicators 160B and 162B may provide additional information to an operator regarding the severity of the irregular statuses. For example, in certain embodiments, the visual indicator 160B may include a font color 170 of yellow, which may convey to the operator that the irregular status being experienced by the "Gap A" measurement of channel 1 is a bypass status. By further example, in certain embodiments, the visual indicator 162B may include a font color 172 of red, which may convey to the operator that the irregular status being experienced by the "1xD" measurement (e.g., the 1x filtered amplitude measurement) of channel 2 is a latched alarm status. As such, when viewing the visual indicators 160B and 162B, the operator may quickly ascertain which measurements are experiencing an irregular status as well as an indication of the severity of the irregular statuses. For example, in certain embodiments, a progressively increasing brightness of a color (e.g., from a dark red to a bright red) may be used to convey a progressively increasing severity of the status (e.g., a bypass status to a currently alarming status). Furthermore, in certain embodiments, the severity of an irregular status may additionally or alternatively depend on an amount of time that the measurement has been experiencing an irregular status, how far beyond the threshold values the measurement has reached, or a similar indication of severity. It should be appreciated that the specific colors described above and below are provided merely as examples, and that, in certain embodiments, any color (e.g., red, orange, yellow, green, blue, purple, or any other suitable color) may be used to indicate a severity of an irregular status.

However, it may be appreciated that other colors may also be used in visual indicators to provide information regarding the severity of one or more irregular status. For example, as illustrated by FIG. 9, the direct view screen 124C includes visual indicators 160C and 162C that are respectively indicative of irregular statuses being experienced by the "Gap A" measurement of channel 1 and by the "1xD" measurement (e.g., the 1x filtered amplitude measurement) of channel 2. In particular, the visual indicators 160C and 162C respectively include a particular background color (e.g., background colors 174 and 176) to reflect the severity of the identified measurement experiencing the irregular status. For example, in certain embodiments, the visual indicator 160C may have a background color 174 of orange to indicate that the identified measurement has a latched alarm status, while the visual indicator 162C may have a background color 176 of purple to indicate a currently alarming status. It may be appreciated that, in other embodiments, other types of colors (e.g., foreground colors, border colors, etc.) as well as other colors (e.g., red, orange, green, blue, purple, etc.) may also be used to convey the severity of an irregular status in the visual indicators (e.g., visual indicators 160C and 162C).

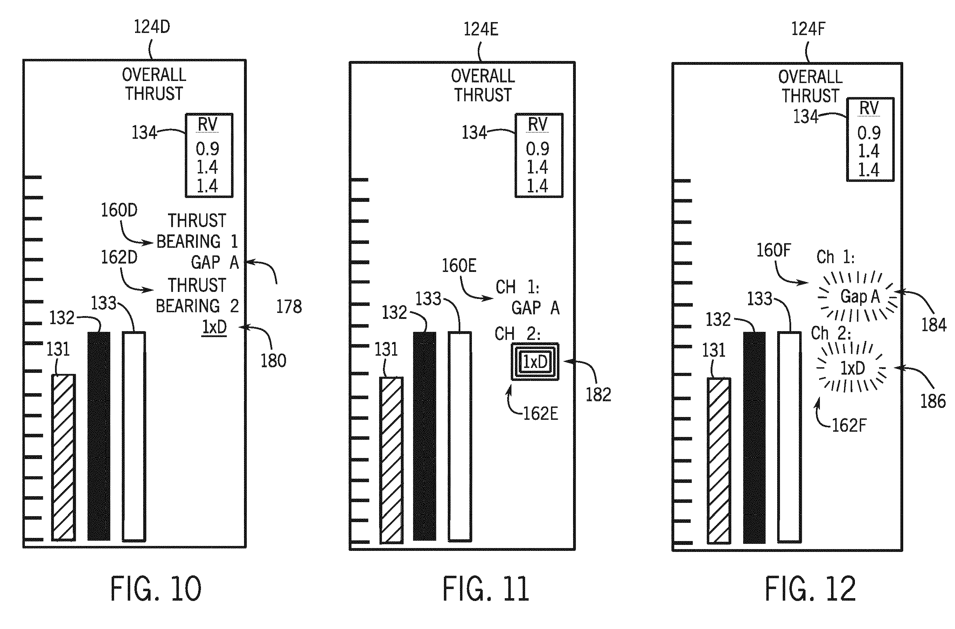

FIG. 10 is a screen view of an alternative embodiment of the direct view screen 124D, in which the visual indicators 160D and 162D include channel names as well as font emphasis to convey the severity of the irregular statuses. That is, the visual indicators 160D and 162D each respectively include an identifier (e.g., the plain text name) of the type of measurement (e.g., measurement types 114, 116, 118, or 120) experiencing the irregular status. In particular, the channel identification portion of visual indicators 160D and 162D include the text, "THRUST," to indicate that both channels perform measurements of the THRUST measurement type 114. As opposed to the channel identification of "Ch 1" and "Ch 2" used in other disclosed embodiments, the visual indicators 160D and 162D provide measurement type information (e.g., as listed on the measurement type screen 112 of FIG. 6) that may assist an operator viewing the direct view screen 124D to more quickly ascertain which measurement types have a measurement with an irregular status. It may be appreciated that, in other embodiments, other representations may be used for channel or measurement type identification (e.g., images or icons representative of certain monitored equipment or certain measurements) that may similarly provide an unambiguous identification of the channel and/or measurement type with the measurement experiencing the irregular status.

Further, as illustrated by visual indicators 160D and 162D, measurement identification portions (e.g., "Gap A" for visual indicator 160D, and "1xD" for visual indicator 162D) of the visual indicators 160D and 162D respectively include a particular font emphasis to convey a severity of the irregular status being experienced. For example, the illustrated measurement identification portion of visual indicator 160D (e.g., "Gap A") has a bold font emphasis 178 that may, in certain embodiments, indicate that the "Gap A" measurement of the identified "THRUST" measurement type (e.g., measurement type 114 illustrated in FIG. 6) has a latched alarm status. By further example, the illustrated measurement identification portion of visual indicator 162D (e.g., "1xD") has a both a bold and an underlined font emphasis 180 that may, in certain embodiments, indicate that the identified "1xD" measurement (e.g., the 1x filtered amplitude measurement) of the identified "THRUST" measurement type has a currently alarming status. It should be appreciated that the described font emphases are merely provided as examples and that, in other embodiments, font emphases may include bolding, underlining, multiple underlining, strike-through, double strike-through, the use of particular fonts, the use of particular font sizes, the use of all capital letters, or other suitable font emphases may be used to convey a severity of the irregular statuses of the measurements.

FIG. 11 is a screen view of an embodiment of the direct view screen 124E, for which the visual indicators 160E and 162E include border emphasis to convey the respective severities of the irregular statuses. For example, as illustrated in FIG. 11, the direct view screen 124E includes the visual indicator 160E that does not include any additional borders, which may be used to convey to the operator that the irregular status of the "Gap A" measurement may have a relatively low severity (e.g., a bypass status). In contrast, the visual indicator 162E includes three borders 182 surrounding the measurement identification portion of the visual indicator 162E, which may be used to convey the to the operator that the irregular status of the "1xD" measurement may have a relatively high severity (e.g., a currently alarming status). It may be appreciated that the borders described above are merely provided as examples of border emphasis and that, in certain embodiments, the severity of the irregular status may be conveyed through a number of borders (e.g., 0, 1, 2, 3, 4, 5, or more layered borders), a thickness of the one or more borders, a color of the one or more borders, a shape of the one or more borders (e.g., rectangular, circular, oval, triangular, hexagonal, square, etc.) a style of the one or more borders, border animations (e.g., blinking), or other suitable border emphases.

FIG. 12 is a screen view of an embodiment of a direct view screen 124F, for which the visual indicators 160F and 162F include animated emphasis to convey a severity of their respective irregular statuses. For example, the measurement identification portions of the visual indicators 160F and 162F may be animated such that they blink, strobe, flash, move about some path (e.g., left and right, up and down, a circular path, a random path, etc.), or another suitable form of animated emphasis, as indicated by the lines 184 and 186. Further, a rate of the animation, colors of the animation, and so forth may be used to convey the severity of the irregular statuses being experienced by the indicated measurements. For example, in certain embodiments, the measurement identification portion of the visual indicator 160F may blink at a relatively slow rate (e.g., as indicated by lines 184), which may indicate that that the "Gap A" measurement may have a relatively low severity (e.g., a bypass status). By further example, in certain embodiments, the measurement identification portion of the visual indicator 162F may blink at a relatively rapid rate (e.g., as indicated by lines 186), which may indicate that that the "1xD" measurement may have a relatively high severity (e.g., a currently alarming status). It may be appreciated that the described animation is provided as merely an example and that, in certain embodiments, any animation (e.g., animated channel names, animated borders, animated or changing foreground and/or background colors, or another suitable animated emphasis) may be used to convey the severities of the irregular statuses being experienced by one or more measurements.

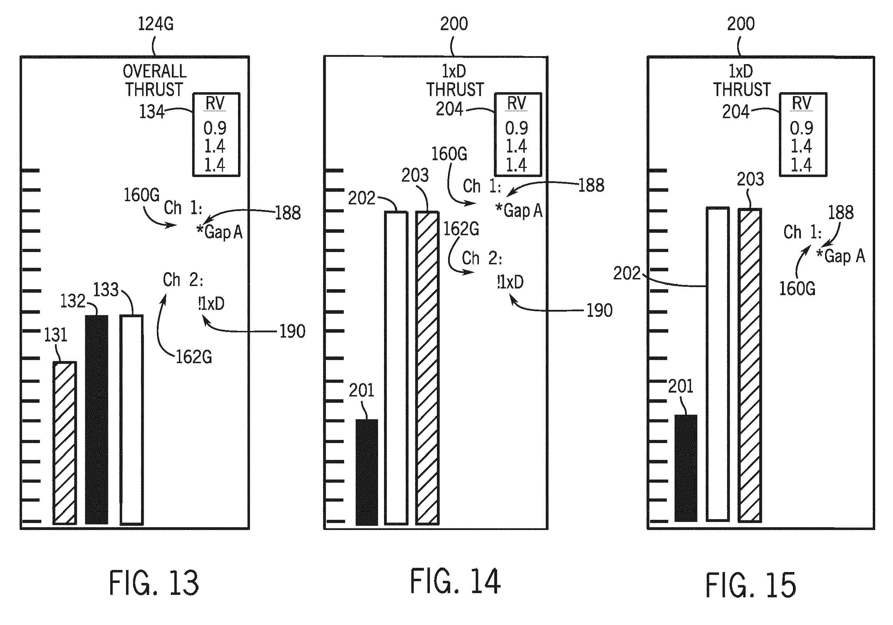

FIG. 13 is a screen view of an embodiment of a direct view screen 124G, for which the visual indicators 160G and 162G include character emphases to convey the respective severities of the irregular statuses being experienced by different measurements. For example, as illustrated in FIG. 13, measurement identification portion the visual indicator 160G includes an additional character 188 (e.g., an asterisk), which may denote that that the indicated measurement has a relatively low severity irregular status (e.g., a bypass status). By further example, the illustrated visual indicator 162G also includes an additional character 190 (e.g., an exclamation mark), which may denote that the indicated measurement has a relatively high severity irregular status (e.g., a latched alarm status). In other embodiments, the additional characters may include multiple characters; for example, a measurement with one asterisk may have a lower relative severity than a measurement with two asterisks, three asterisks, and so forth. In another embodiment, the character emphasis may classify or codify the irregular status (e.g., a measurement with an "A" character or a number "1" may have the highest severity, a measurement with a "B" character or a number "2" may have a slightly lower severity, and so forth). In other embodiments, the size of the character may be indicative of the severity of the status. In still other embodiments, the character may be used to convey a numerical value (e.g., 1 to 9) to convey the severity of the status. It may be appreciated that these are merely provided as examples and that, in other embodiments, any suitable method of character emphasis may be applied.

FIG. 14 is a screen view of an embodiment of a direct view screen 200 associated with a number of "1xD THRUST" measurements, at least one of which is experiencing an irregular status. That is, in an example, an operator may initially be presented with a direct view screen 124, as illustrated in FIG. 6, prior to any measurement entering an irregular status. Subsequently, as seen in FIG. 13, the direct view screen 124G may be presented once one or more "Gap A" and one or more "1xD" measurements have encountered irregular statuses, respectively. For such an example, in certain embodiments, when the operator navigates to the direct view screen associated with the particular measurement having the irregular status (e.g., a latched alarm status), the operator may be presented with the direct view screen 200 illustrated in FIG. 14. The direct view screen 200 of FIG. 14 includes a bar graphs 201, 202, and 203, as well as a RV value section 204, which provide representations of the current values for the "1xD THRUST" measurements. Further, since the irregular statuses of both the "Gap A" and "1xD" measurements continue to persist, the illustrated direct view screen 200 includes the visual indicators 160G and 162G described in FIG. 13. As such, as illustrated by FIG. 14, the visual indicators 160G and 162G may be presented on each direct view screen 122 in the GUI 98 until the irregular statuses have been resolved. In other embodiments, a visual indicator (e.g., visual indicator 162G) may not be presented when it corresponds to the direct view screen (e.g., direct view screen 200) currently being displayed.

Continuing through the example above, in certain embodiment, when the operator is viewing the direct view screen 200 of FIG. 14, if the status of the one or more offending "1xD THRUST" measurements return to a regular status (e.g., normal or healthy), then the visual indicator 162G associated with the irregular status may be removed. By specific example, if the operator viewing the direct view screen 200 of FIG. 14 clears the latched alarm status being experienced by the one or more "1xD THRUST" measurements, then the operator may subsequently be presented with the direct view screen 200 of FIG. 15. As illustrated by FIG. 15, the direct view screen 200 now includes only a single visual indicator 160G for the irregular status of the one or more "Gap A" measurements associated with channel 1. It may also be appreciated that certain irregular statuses may resolve without operator intervention (e.g., a bypass status being removed when a measurement resumes being determined).

Technical effects of the invention include enabling an operator to glean more information from screens of a GUI displayed on a display device of an industrial monitoring system. For example, the present approach enables an operator to visually ascertain that one or more measurements (e.g., corresponding to direct view screens different from a direct view screen being viewed) are experiencing irregular statuses. The present approach further provides for the use of various visual effects (e.g., font colors, background colors, font emphasis, animation emphasis, border emphasis, character emphasis, and so forth) to convey to the operator the severity of each of the irregular statuses, all without interfering with the normal presentation of measurement data. Accordingly, the present approach enables the operator to immediately be made aware of measurements experiencing irregular statuses and, therefore, enables the operator to more quickly address any potential problems with the monitored mechanical system.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   an industrial monitor configured to receive inputs from a plurality of sensors coupled to a mechanical system, wherein the industrial monitor is configured to determine a plurality of measurements of the mechanical system in operation based, at least in part, on the received inputs; and
   a display device communicatively coupled to the industrial monitor, wherein the display device is configured to present a user interface comprising a plurality of screens, wherein each screen of the plurality of screens is configured to selectively present a visual indicator when a particular measurement of the plurality of measurements has an irregular status, and wherein the visual indicator identifies the particular measurement having the irregular status.
2. The system of clause 1, wherein the visual indicator identifies a channel of the industrial monitor that is configured to determine the particular measurement having the irregular status or identifies a measurement type of the particular measurement having the irregular status.
3. The system of any preceding clause, wherein the visual indicator has an appearance that varies according to a severity of the irregular status.
4. The system of any preceding clause, wherein the appearance comprises a font color, a background color, a font emphasis, an animated emphasis, a border emphasis, a character emphasis, or a combination thereof.
5. The system of any preceding clause, wherein the visual indicator is configured to receive user input, and wherein the display device is configured to present a particular screen of the plurality of screens associated with the particular measurement upon receiving the user input.
6. The system of any preceding clause, wherein each screen of the plurality of screens is configured to hide the visual indicator when the particular measurement of the plurality of measurements no longer has the irregular status.
7. The system of any preceding clause, wherein the display device is disposed on the industrial monitor, portable monitoring device, or a mobile computing device.
8. The system of any preceding clause, wherein each screen of the plurality of screens is configured to present the visual indicator in a manner that does not obscure other data presented on each screen.
9. The system of any preceding clause, wherein the irregular status comprises a currently alarming status, a latched alarm status, a bypass status, or a combination thereof.
10. The system of any preceding clause, wherein the mechanical system comprises a gas turbine system, a steam turbine system, a hydraulic turbine system, a wind turbine system, or an industrial automation system.
11. A method, comprising:
   receiving inputs from a plurality of sensor devices coupled to a mechanical device;
   determining a plurality of measurements for the mechanical device based on the received inputs;
   displaying a particular screen of a user interface on a display device, wherein the user interface comprises a plurality of screens; and
   selectively presenting a corresponding visual indicator on the particular screen of the user interface for each of one or more measurements of the plurality of measurements having an irregular status.
12. The method of any preceding clause, wherein the visual indicator comprises a channel identification portion and a measurement identification portion.
13. The method of any preceding clause, wherein the one or more measurements are not illustrated on the particular screen.
14. The method of any preceding clause, comprising receiving a user input and, in response, displaying a different screen of the user interface and presenting the corresponding visual indicator on the different screen for each of the one or more measurements of the plurality of measurements having the irregular status.
15. The method of any preceding clause, wherein the irregular status comprises a currently alarming status, a latched alarm status, a bypass status, or a combination thereof.
16. The method of any preceding clause, wherein an appearance of the visual indicator comprises a font color, a background color, an animation emphasis, a border emphasis, a character emphasis, or a combination thereof, and wherein the appearance is configured to illustrate a severity of the irregular status.
17. A non-transitory, computer-readable medium storing instructions executable by a processor of an electronic device, the instructions comprising:
   instructions to determine, via a processor, a plurality of measurements for a mechanical system based on sensor inputs received from one or more sensors coupled to the mechanical system;
   instructions to selectively present, on a display device, a direct view screen of a user interface; and
   instructions to present, on the direct view screen, a visual indicator when the processor determines that a particular measurement of the plurality of measurements has an irregular status, wherein the visual indicator identifies the particular measurement and indicates a severity of the irregular status of the particular measurement.
18. The medium of any preceding clause, wherein the severity of the irregular status is based, at least in part, on the irregular status, a duration of the irregular status, how far beyond a threshold value the particular measurement has reached, or a combination thereof.
19. The medium of any preceding clause, wherein the severity of the irregular status is indicated by a font color, a background color, a font emphasis, an animated emphasis, a border emphasis, a character emphasis, or a combination thereof, of the visual indicator.
20. The medium of any preceding clause, comprising instructions to remove, from the direct view screen, the visual indicator when the processor determines that the irregular status of the particular measurement has been cleared.

## Claims

1. A system (10), comprising:
an industrial monitor (14) configured to receive inputs from a plurality of sensors (20, 22, 24, 26, 28, 30, 32) coupled to a mechanical system (12), wherein the industrial monitor (14) is configured to determine a plurality of measurements of the mechanical system (12) in operation based, at least in part, on the received inputs; and
a display device (94) communicatively coupled to the industrial monitor (14), wherein the display device (94) is configured to present a user interface (98) comprising a plurality of screens (122), wherein each screen of the plurality of screens (122) is configured to selectively present a visual indicator when a particular measurement of the plurality of measurements has an irregular status, and wherein the visual indicator identifies the particular measurement having the irregular status.

2. The system of claim 1, wherein the visual indicator identifies a channel of the industrial monitor that (14) is configured to determine the particular measurement having the irregular status or identifies a measurement type of the particular measurement having the irregular status.

3. The system of claim 1 or claim 2, wherein the visual indicator has an appearance that varies according to a severity of the irregular status, wherein, preferably, the appearance comprises a font color, a background color, a font emphasis, an animated emphasis, a border emphasis, a character emphasis, or a combination thereof.

4. The system of claim 1, 2 or 3, wherein the visual indicator is configured to receive user input, and wherein the display device (94) is configured to present a particular screen of the plurality of screens (122) associated with the particular measurement upon receiving the user input.

5. The system of any preceding claim, wherein the display device (24) is disposed on the industrial monitor (14), portable monitoring device (70), or a mobile computing device (72).

6. The system of any preceding claim, wherein:
each screen of the plurality of screens (122) is configured to hide the visual indicator when the particular measurement of the plurality of measurements no longer has the irregular status, and/or
each screen of the plurality of screens (122) is configured to present the visual indicator in a manner that does not obscure other data presented on each screen.

7. The system of any preceding claim, wherein the irregular status comprises a currently alarming status, a latched alarm status, a bypass status, or a combination thereof.

8. The system of any preceding claim, wherein the mechanical system comprises a gas turbine system (12), a steam turbine system, a hydraulic turbine system, a wind turbine system, or an industrial automation system.

9. A method, comprising:
receiving inputs from a plurality of sensor devices (20, 22, 24, 26, 28, 30, 32) coupled to a mechanical device (12);
determining a plurality of measurements for the mechanical device (12) based on the received inputs;
displaying a particular screen of a user interface (98) on a display device (94), wherein the user interface comprises a plurality of screens (122); and
selectively presenting a corresponding visual indicator on the particular screen of the user interface (98) for each of one or more measurements of the plurality of measurements having an irregular status.

10. The method of claim 9, wherein:
the visual indicator comprises a channel identification portion and a measurement identification portion, and/or
the one or more measurements are not illustrated on the particular screen.

11. The method of claim 8, 9 or 10, comprising receiving a user input and, in response, displaying a different screen of the user interface (98) and presenting the corresponding visual indicator on the different screen for each of the one or more measurements of the plurality of measurements having the irregular status.

12. The method of any one of claims 8 to 11, wherein the irregular status comprises a currently alarming status, a latched alarm status, a bypass status, or a combination thereof.

13. The method of any one of claims 8 to 12, wherein an appearance of the visual indicator comprises a font color, a background color, an animation emphasis, a border emphasis, a character emphasis, or a combination thereof, and wherein the appearance is configured to illustrate a severity of the irregular status.

14. A non-transitory, computer-readable medium storing instructions executable by a processor of an electronic device, the instructions comprising:
instructions to determine, via a processor, a plurality of measurements for a mechanical system based on sensor inputs received from one or more sensors coupled to the mechanical system;
instructions to selectively present, on a display device, a direct view screen of a user interface; and
instructions to present, on the direct view screen, a visual indicator when the processor determines that a particular measurement of the plurality of measurements has an irregular status, wherein the visual indicator identifies the particular measurement and indicates a severity of the irregular status of the particular measurement.

15. The medium of claim 14, comprising instructions to remove, from the direct view screen, the visual indicator when the processor determines that the irregular status of the particular measurement has been cleared.
